# EUROPEAN PATENT APPLICATION

(11) **EP 3 450 405 A1**
(43) Date of publication of application: **06.03.2019**
(21) Application number: 17306144.1
(22) Date of filing: 04.09.2017
(51) Int. Cl.: C02F 11/10, C02F 11/12, C10L 9/08, C02F 11/04

(54) **METHOD AND EQUIPMENT FOR DIGESTING A BIODEGRADABLE LIQUID FILTRATE**

(71) Applicant: SUEZ Groupe, 92040 Paris la Défense Cedex (FR)
(72) Inventor: CHOO-KUN, Marlène, 75011 PARIS (FR); FOURNOT-McGILL, Alexandra, 75002 PARIS (FR)
(74) Representative: Esselin, Sophie

(57) **Abstract**

The invention relates to the field of waste treatment and hydrothermal carbonization and concerns a method for digesting a biodegradable liquid filtrate (21), comprising:
- a step of hydrothermal carbonization of a biomass (14) in a hydrothermal carbonization unit (13), to obtain a product of hydrothermal carbonization;
- a step of dewatering of the product of hydrothermal carbonization into a ultra-dewatered biomass (22) and the biodegradable liquid filtrate (21);
the method further comprising a step of feeding a first anaerobic digester (23) with at least a part of the biodegradable liquid filtrate (21) to generate biogas (12) and a digestate (24).

The invention also concerns an equipment for digesting a biodegradable liquid filtrate.

## Description

### TECHNICAL FIELD OF THE INVENTION

The invention relates to the field of waste treatment based on dewatering and concerns a method for anaerobically digesting a liquid filtrate from an ultra-dewatering of biomass or sludge. The invention also concerns an equipement for digesting a liquid filtrate from an ultra-dewatering of biomass, and aims at valorizing the product from a dewatering.

### BACKGROUND

Biomass products such as municipal or industrial sludge, organic waste or mixes of these, can be treated by two main types of thermal conditioning.

The first type of treatment is the thermal hydrolysis process (also known as THP): the biomass is pressure-cooked at rather high temperatures and pressures. The hydrolyzed sludge can then be subject to biological treatments, for example anaerobic digestion, to reduce sludge amount and produce biogas.

The second type of treatment is hydrothermal carbonization (also known as HTC). It is a thermo-chemical process of biomass conversion at high temperatures and pressures. The temperature and duration of the process are typically higher and longer than those of the THP. During the HTC reaction, water, carbon dioxide and other compounds are cleaved from the biomass. Thereby the energy density of the biomass is significantly raised and the heating value is approximate to that of dry, high quality brown coal. At the same time, the macromolecular structure of the original biomass is partially to largely destroyed. The resulting product of HTC is a coal-water-slurry. The coal fraction can easily be separated and differs significantly in its chemical and physical properties from the starting material.This provides a porous, brittle and in part dust-like product that is considerably easier to dry and to convert to electricity, heat or fuel than the origin biomass.

These types of treatment are not entirely satisfactory. The THP process necessitates added energy and hence further operating costs. The added water in the form of steam increases the amount of material to treat further.

The HTC produces a solid phase (coal) and a liquid phase. Previous experiments performed in the HTC conditions have shown that the organic material in the liquid filtrate obtained is either poorly or not biodegradable. Further biological treatment of the liquid phase is therefore impractical. Final products of the HTC are not completely valorized.

### SUMMARY OF THE INVENTION

The invention aims to provide a solution to valorize the filtrate obtained after the treatment of biomass by hydrothermal carbonization and dewatering of biomass and anaerobic digestion of the said resulting biodegradable filtrate to increase the energy production from biomass by obtaining biogas.

To this end, the subject of the invention is a method for digesting a biodegradable liquid filtrate comprising a step of hydrothermal carbonization of a biomass in a hydrothermal carbonization unit, to obtain a product of hydrothermal carbonization; a step of dewatering of the product of hydrothermal carbonization into an ultra-dewatered biomass and the biodegradable liquid filtrate; a step of feeding a first anaerobic digester with at least a part of the biodegradable liquid filtrate to generate biogas and a digestate. This enables to valorize the liquid filtrate using a digestion process, thus increasing the value of the final product and reducing the final sludge amount. In the present specification reference is made to biomass or sludge indistinctely.

Advantageously, the step of hydrothermal carbonization comprises a step of pressurization to pressurize the biomass; a step of thermal conditioning for a duration in a reactor to heat the pressurized biomass; a step of depressurization to obtain the product of hydrothermal carbonization.

The step of thermal conditioning confers a particular structure to the product of the hydrothermal carbonization, leading to a biodegradable liquid filtrate.

According to another embodiment of the invention, the method may further comprise a step of feeding the hydrothermal carbonization unit with at least a part of the digestate of the first anaerobic digester. This enables to increase the biogas production and maximize energy and/or nutrient recovery from sludge or biomass.

According to another embodiment of the invention, the method may further comprise a step of feeding the hydrothermal carbonization unit with a second digestate of a second anaerobic digester. This enables to treat the second digestate and increase the biogas production. It results in a decrease of the amount of final sludge.

According to another embodiment of the invention, the biodegradable liquid filtrate comprising nutrients, the method may comprise a step of recovery of nutrients from the biodegradable liquid filtrate upstream from the first anaerobic digester, for example via precipitation of apatite or struvite in the case of phosphorus recovery. This enables to recover nutrients which may be rejected if the liquid filtrate was not treated.

According to another embodiment of the invention, the digestate comprising nutrients, the method may comprise a step of recovery of nutrients from the digestate or a subproduct of the digestate downstream from the first anaerobic digester. This enables to recover nutrients which may be rejected if the liquid filtrate or a subproduct of the filtrate was not treated.

According to another embodiment of the invention, the biodegradable liquid filtrate comprising unwanted compounds such as refractory and/or digestion inhibitory compounds, the method may comprise a step of pre-treatment process to remove the unwanted compounds from the biodegradable liquid filtrate upstream from the first anaerobic digester. This enables to boost the digestion.

According to another embodiment of the invention, the method may comprise a step of feeding the first anaerobic digester with any biomass, treated or untreated waste material. This allows a co-digestion of the liquid filtrate with any biomass or waste material. This leads to an increased digestion capacity.

The invention also relates to an equipment digesting a biodegradable liquid filtrate comprising a hydrothermal carbonization unit configured to be fed with biomass and to form a product from hydrothermal carbonization; a dewatering unit configured to dewater the product of hydrothermal carbonization into a ultra-dewatered biomass and the biodegradable liquid filtrate; a first anaerobic digester comprising a first inlet intended to be fed with at least a part of the biodegradable liquid filtrate to generate biogas and a digestate.

According to another embodiment of the invention, the equipment may comprise a recirculation loop between an outlet of the first anaerobic digester and an inlet of the hydrothermal carbonization unit, intended to feed the hydrothermal carbonization unit with at least a part of the digestate of the first anaerobic digester.

According to another embodiment of the invention, the equipment may comprise a second anaerobic digester, the second anaerobic digester comprising an outlet connected to an inlet of the hydrothermal carbonization unit, so as to feed the hydrothermal carbonization unit with a second digestate of the second anaerobic digester.

According to another embodiment of the invention, the biodegradable liquid filtrate comprising nutrients, the equipment may comprise a device located upstream from the first anaerobic digester, comprising extraction means to extract nutrients from the biodegradable liquid filtrate.

According to another embodiment of the invention, the digestate comprising nutrients, the equipment may comprise a device located downstream from the first anaerobic digester, comprising extraction means to extract nutrients from the digestate.

According to another embodiment of the invention, the biodegradable liquid filtrate comprising unwanted compounds like refractory and/or digestion inhibitory compounds, the equipment may comprise a pre-treatment device located upstream from the first anaerobic digester, comprising elimination means to remove the unwanted compounds from the biodegradable liquid filtrate.

According to another embodiment of the invention, the first anaerobic digester may comprise an inlet intended to be fed with any biomass, treated or untreated waste material.

### BRIEF DESCRIPTION OF THE DRAWINGS

The accompanying drawings illustrate various non-limiting, exemplary, innovative aspects in accordance with the present description:
- Figure 1 schematically represents a block diagram with the step(s) of a method for digesting a biodegradable liquid filtrate from an ultra-dewatering of biomass to generate biogas according to the invention;
- Figure 2 schematically represents a first embodiment of the equipment for digesting a biodegradable liquid filtrate from an ultra-dewatering of biomass to generate biogas according to the invention;
- Figure 3 schematically represents another embodiment of the equipment for digesting a biodegradable liquid filtrate from an ultra-dewatering of biomass to generate biogas according to the invention;
- Figure 4 schematically represents another embodiment of the equipment for digesting a biodegradable liquid filtrate from an ultra-dewatering of biomass to generate biogas according to the invention;
- Figure 5 schematically represents another embodiment of the equipment for digesting a biodegradable liquid filtrate from an ultra-dewatering of biomass to generate biogas according to the invention;
- Figure 6 schematically represents another embodiment of the equipment for digesting a biodegradable liquid filtrate from an ultra-dewatering of biomass to generate biogas according to the invention.

For the sake of clarity, the same elements have the same references in the various figures.

### DETAILED DESCRIPTION

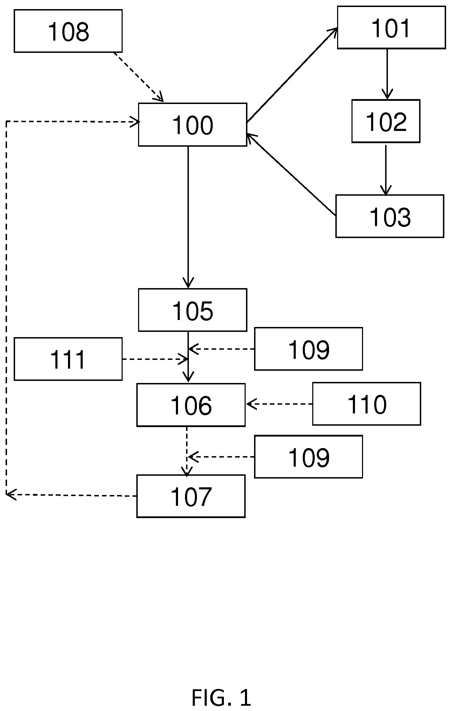

**Figure 1** schematically represents a block diagram with the step(s) of a method for digesting a biodegradable liquid filtrate from an ultra-dewatering of biomass to generate biogas according to the invention. The method according to the invention comprises a step 100 of hydrothermal carbonization of a biomass 14 in a hydrothermal carbonization unit 13, to obtain a product of hydrothermal carbonization. The method further comprises a step 105 of dewatering of the product of hydrothermal carbonization into an ultra-dewatered biomass 22 and the biodegradable liquid filtrate 21. The method further comprises a step 106 of feeding a first anaerobic digester 23 with at least a part of the biodegradable liquid filtrate 21 to generate biogas 12 and a digestate 24. This allows to solubilize and transform organic matter into a mainly biodegradable form which is recovered in the liquid filtrate after the step 105 of dewatering. Thanks to the step 100 of hydrothermal carbonization (HTC), the natural thermo-chemical process of carbonization is reproduced. During this step at high pressures and temperatures, a decarboxylation (C-OOH removal) and dehydration (OH removal) takes place. From this, it follows that the molecules obtained become more concentrated in energy, with an increased Lower Heating Value, and the molecules obtained become also hydrophobic, thus making the dewatering easier. Then a dewatering step occurs. The anaerobic biodegradability of the organic compound in the liquid filtrate is over 55%, more particularly over 60%. The invention enables to valorize the liquid filtrate using a digestion process, thus increasing the value of the final products.

In certain embodiments of this invention, this enables to increase the biogas production of 15-20% in comparison with a process without digesting the liquid filtrate, and of about 5-10% points in comparison with a standard THP process. It enables to maximize energy and/or nutrient recovery of biomass. The biomass cake's dryness obtained is significantly increased, in the case of the piston press, reaching over 50% DM, rarely under 55% DM (dry matter) with a LHV of the cake increase of over 75%, typically over 6MJ/kg of cake, i.e. a higher LHV in comparison with method of the state of the art.

The step 105 of dewatering may be performed by any dewatering unit. For example, a suitable dewatering unit may be a piston press, a screw press or a centrifuge. The step 105 of dewatering of the product of hydrothermal carbonization into an ultra-dewatered biomass 22 and the biodegradable liquid filtrate 21 is preferably performed using a piston press comprising a cylinder, wherein said cylinder may be a rotating cylinder, and wherein a pneumatic or hydraulic pressure is applied to a piston translating into the cylinder. A surface permeable to the liquid phase lets the liquid filtrate flow through the surface. And the ultra-dewatered biomass 22 may be retrieved. The piston press is advantageously used. It enables to reduce sludge disposal amounts by at least 50% by attaining final solid phase dryness's of over 50% in the case of a piston press.

The step 100 of hydrothermal carbonization comprises a step 101 of pressurization to pressurize the biomass 14; a step 102 of thermal conditioning for a duration in a reactor 17 to heat the pressurized biomass; a step 103 of depressurization to obtain the product of hydrothermal carbonization. The duration may be comprised between some minutes and some hours, for example between 15 to 200 minutes, and preferably around 2 hours or 2 hours 30 minutes. The features of the hydrothermally carbonized biomass obtained at the end of the HTC make it easier to separate the liquid filtrate. The liquid filtrate is more loaded with soluble and biodegradable matter. This makes it feasible to digeste the liquid filtrate.

According to another embodiment of the invention, the method may further comprise a step 107 of feeding the hydrothermal carbonization unit 13 with at least a part of the digestate 24 of the first anaerobic digester 23. This enables to increase the biogas production by 15-20% and maximize energy and/or nutrient recovery of sludge.

According to another embodiment of the invention, the method may further comprise a step 108 of feeding the hydrothermal carbonization unit with a second digestate of a second anaerobic digester. This enables to treat the second digestate and increase the biogas production. It results in a decrease of the amount of final sludge.

According to another embodiment of the invention, the biodegradable liquid filtrate 21 comprising nutrients, the method may comprise a step 109 of recovery of nutrients from the biodegradable liquid filtrate 21 upstream from the first anaerobic digester 23. The nutrients may be for example ammonium sulfate or struvite. This enables to recover nutrients which may be rejected if the liquid filtrate was not treated. In the case of phosphorus, this nutrient may be recovered via precipitation of apatite or struvite and further used in another process.

Similarly, the digestate 24 comprising nutrients, the method may comprise a step 109 of recovery of nutrients from the digestate or subproduct of the digestate 24 downstream from the first anaerobic digester 23. The nutrients may be for example ammonium sulfate or struvite. This enables to recover nutrients which may be rejected if the liquid filtrate was not treated. In case of phosphorus, this nutrient may be recovered and further used in another process.

The biodegradable liquid filtrate 21 may comprise unwanted compounds such as refractory and/or digestion inhibitory compounds. In this case, the method may comprise a step 111 of pre-treatment process to remove the unwanted compounds from the biodegradable liquid filtrate 21 upstream from the first anaerobic digester 23. This allows boosting the anaerobic digestion in the case where such compounds,for example high concentrations of N, inhibiting digestion, are present in the liquid filtrate.

According to another embodiment of the invention, the method may comprise a step 100 of feeding the first anaerobic digester 23 with any biomass or waste material. This allows a co-digestion of the liquid filtrate with any biomass, treated or untreated waste material 61, for example a pyrolised manure. This leads to an increased digestion capacity.

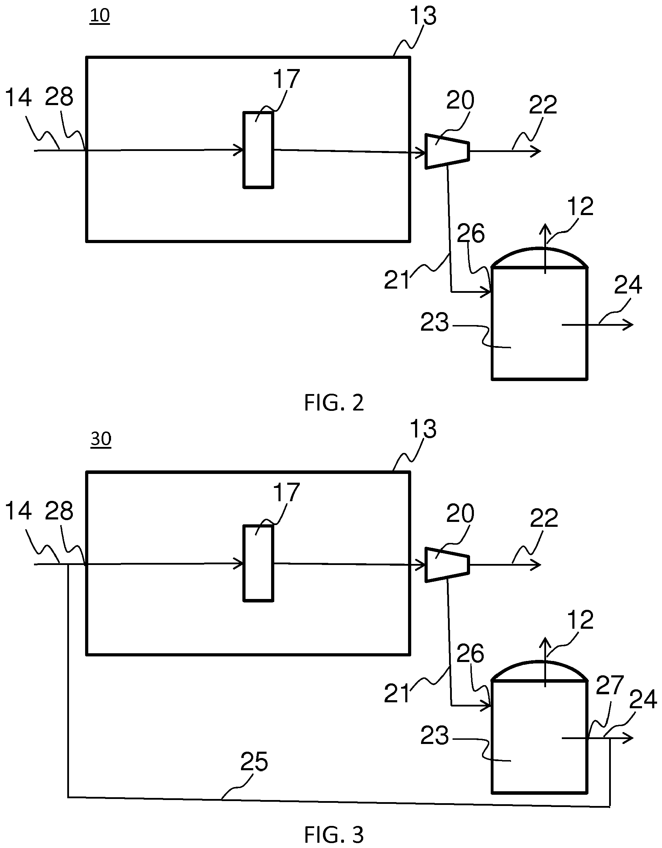

**Figure 2** schematically represents a first embodiment of the equipment 10 for digesting a biodegradable liquid filtrate 21 from an ultra-dewatered biomass to generate biogas 12 according to the invention. The equipment 10 digesting the biodegradable liquid filtrate 21 comprises a hydrothermal carbonization unit 13 configured to be fed with biomass 14 and to form a product from hydrothermal carbonization. The equipment comprises a dewatering unit 20 configured to dewater the product of hydrothermal carbonization into a ultra-dewatered biomass 22 and the biodegradable liquid filtrate 21; a first anaerobic digester 23 comprising a first inlet 26 intended to be fed with at least a part of the biodegradable liquid filtrate 21 to generate biogas 12 and a digestate 24. Said first inlet 26 may, in turn, be fed with biomass, treated or untreated waste material or sludge. It can be noted that the first inlet 26 may be fed with only a part of the biodegradable liquid filtrate 21 or the totality of the biodegradable liquid filtrate 21.

The invention focuses on the digestion of the liquid filtrate. The digested liquid filtrate may be redirected to any other biological treatment unit for further treatment.

The invention is based on the fact that the biomass, i.e. all the incoming biomass, is not hydrolyzed but carbonized within a HTC unit. After the steps of HTC and dewatering, the liquid filtrate is to be digested, not the ultra-dewatered biomass.

**Figure 3** schematically represents another embodiment of the equipment 30 for digesting a biodegradable liquid filtrate 21 from an ultra-dewatering of biomass to generate biogas 12 according to the invention. The elements of the equipment 30 are identical to the elements of the equipment 10 presented in figure 2. In the embodiment presented in figure 3, the equipment 30 comprises a recirculation loop 25 between an outlet 27 of the first anaerobic digester 23 and an inlet 28 of the hydrothermal carbonization unit 13, intended to feed the hydrothermal carbonization unit 13 with at least a part of the digestate 24 of the first anaerobic digester 23. The digestate 24 (the whole digestate or only a part of it) becomes the biomass at the entrance of the hydrothermal carbonization unit 13 to be treated. The digestate 24 leads to another ultra-dewatered biomass 22 and a biodegradable liquid filtrate 21. This enables to increase the biogas production and maximize energy and/or nutrient recovery of sludge.

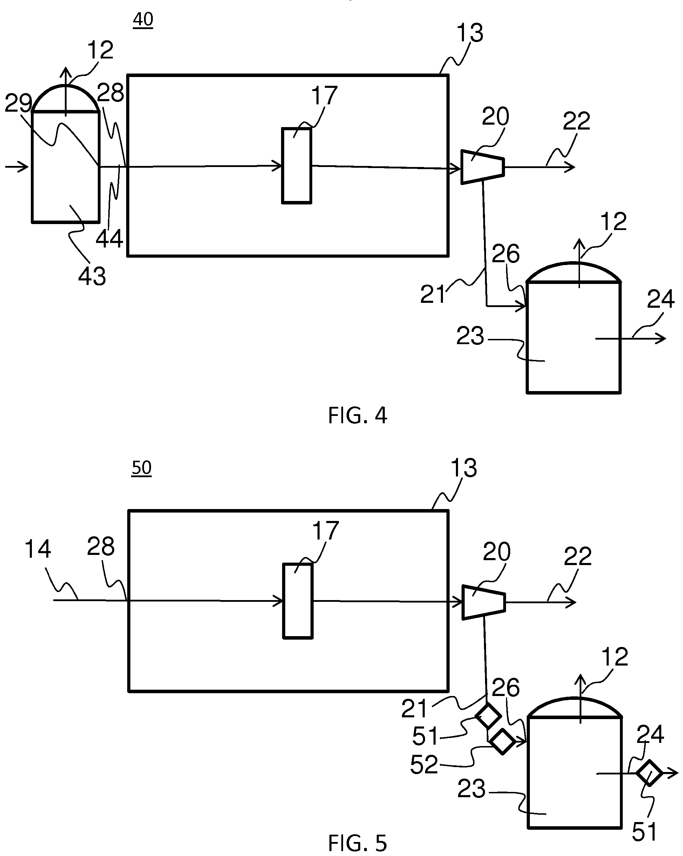

**Figure 4** schematically represents another embodiment of the equipment 40 for digesting a biodegradable liquid filtrate 21 from an ultra-dewatered biomass to generate biogas 12 according to the invention. The elements of the equipment 40 are identical to the elements of the equipment 10 presented in figure 2. In the embodiment presented in figure 4, the equipment 40 comprises a second anaerobic digester 43. The second anaerobic digester 43 comprises an outlet 29 connected to an inlet 28 of the hydrothermal carbonization unit 13, so as to feed the hydrothermal carbonization unit 13 with a second digestate 44 of the second anaerobic digester 43. The biomass entering the hydrothermal carbonization unit 13 is the second digestate 44, which means a biomass which has already been digested. While increasing the biogas production, this enables to treat the second digestate. It leads to a better sludge cake dryness (rarely under 55% dry matter when using a piston press). It results in a decrease of the amount of final sludge.

**Figure 5** schematically represents another embodiment of the equipment 50 for digesting a biodegradable liquid filtrate 21 from an ultra-dewatered biomass to generate biogas 12 according to the invention. The elements of the equipment 50 are identical to the elements of the equipment 10 presented in figure 2. In the embodiment presented in figure 5, the biodegradable liquid filtrate 21 comprising nutrients, the equipment 50 may comprise a device 51 located upstream from the first anaerobic digester 23, comprising extraction means to extract nutrients from the biodegradable liquid filtrate 21. This enables to recover nutrients from the liquid filtrate before the digestion which may be rejected if the liquid filtrate was not treated.

The digestate 24 comprising nutrients, the equipment may also comprise a device 51 located downstream from the first anaerobic digester 23, comprising extraction means to extract nutrients from the digestate 24 or from subproducts of the digestate. This enables to recover nutrients from the digestate which may be rejected if the liquid filtrate was not treated.

As an example, nutrients may be nitrogen or phosphorus elements. Extraction means to extract such nutrients may be membranes or precipitation. They can also be a series of chemical reactions or biological reactors.

In another embodiment of the invention, the biodegradable liquid filtrate 21 comprising unwanted compounds like refractory and/or digestion inhibitory compounds, the equipment 50 may comprise a pre-treatment device 52 located upstream from the first anaerobic digester 23, comprising elimination means to remove the unwanted compounds from the biodegradable liquid filtrate 21. This enables digestion boost. Indeed, for example ammonia is a digestion inhibitor, considered as an unwanted compound. Removing it before the digestion ensures that the digestion is not impeded.

As an example, elimination means to remove unwanted compounds may be a filter, an aeration device and/or a series of chemical reactions to catch the unwanted compounds.

It can be noted that the equipment according to the invention may comprise either a device 51 to extract nutrients, or a device 52 to remove unwanted compounds, or both.

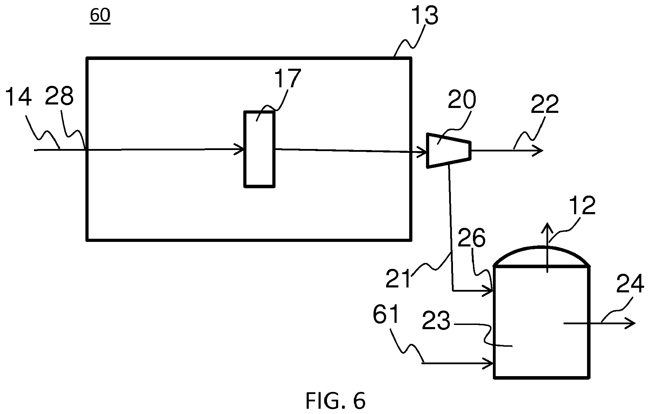

**Figure 6** schematically represents another embodiment of the equipment 60 for digesting a biodegradable liquid filtrate 21 from an ultra-dewatered biomass to generate biogas 12 according to the invention. The elements of the equipment 60 are identical to the elements of the equipment 10 presented in figure 2. In the embodiment presented in figure 6, the first anaerobic digester 23 comprises an inlet intended to be fed with any biomass or waste material 61. The anaerobic digestion of the biodegradable liquid filtrate can take place with any other waste, not necessary sludge. This allows a co-digestion of the liquid filtrate with any biomass or waste material. This leads to an increased digestion capacity.

Tests were performed in order to compare the biogas production (comprising methane) with an equipment according to the invention (with a dedicated digester only fed with the liquid filtrate, as represented in figure 2) and with an equipment implementing thermal hydrolysis process (THP) instead of the hydrothermal carbonization (HTC).

| | Specific production of methane (CH4 L_{STP}/kg_{CODin}) | Total COD (g/L) | Increased biogas production (%) |
|---|---|---|---|
| HTC filtrate | 240-300 | Frequent: 60 (Range: 45-90) | Frequent: 21% (Min: 16%) |
| THP filtrate | 238 | 5-10 | Min: 6% |

There is an increase of biogas production from THP to HTC of 10% points minimum with the equipment according to the invention. Using HTC allows higher performances than using THP.

Tests were performed in order to compare the volume and weight reduction with an equipment according to the invention (HTC and anaerobic digestion) and with an equipment implementing thermal hydrolysis process (THP) instead of the hydrothermal carbonization (HTC).

| | Dryness typically incoming to the process (%) | Dryness exiting the process (%) | Volume reduction (%) |
|---|---|---|---|
| HTC and digestion | Generally 20 15-25 | Rarely under 55 min: 50 | Rarely under 64 min: 50 |
| THP and digestion | 15-25 | 40 | Min: 38 |

There is an increase of the volume reduction with the equipment according to the invention. Using the HTC and digestion enables to reach a sludge cake dryness of 55% and more dry matter content when using a piston press, more than using the THP and digestion (40% dry matter).

Thanks to the invention, there is an increase in potential resource recovery in waste water treatment and a decrease in the operating cost through the maximization of energy and/or nutrient recovery of sludge by increasing energy production (by 20% in the case of co-digestion in the main digester) and possibly recovering nutrients through the digestion of the liquid phase of the ultra-dewatering process and through the diversification of the final uses of the solid phase of the ultra-dewatering process, for example incineration and agricultural uses by reducing sludge disposal amounts by at least 50% by attaining final solid phase dryness's of over 50% (particularly when using a piston press) or of 40-45% (when using a centrifuge). Incineration is made possible due to the increase of the LHV of the solid phase by over 75%, thus enabling energy recovery.

The examples disclosed in this specification are only illustrative of some embodiments of the invention. They do not in any way limit the scope of said invention and all possible combinations of the presented embodiments are within the framework of the invention.

## Claims

1. Method for digesting a biodegradable liquid filtrate (21), **characterized in that** it comprises:
- a step (100) of hydrothermal carbonization of a biomass (14) in a hydrothermal carbonization unit (13), to obtain a product of hydrothermal carbonization;
- a step (105) of dewatering of the product of hydrothermal carbonization into a ultra-dewatered biomass (22) and the biodegradable liquid filtrate (21);
the method further comprising a step (106) of feeding a first anaerobic digester (23) with at least a part of the biodegradable liquid filtrate (21) to generate biogas (12) and a digestate (24).

2. Method according to claim 1, **characterized in that** the step (100) of hydrothermal carbonization comprises:
- a step (101) of pressurization to pressurize the biomass (14);
- a step (102) of thermal conditioning for a duration in a reactor (17) to heat the pressurized biomass;
- a step (103) of depressurization to obtain the product of hydrothermal carbonization.

3. Method according to claim 1 or 2, **characterized in that** it further comprises a step (107) of feeding the hydrothermal carbonization unit (13) with at least a part of the digestate (24) of the first anaerobic digester (23).

4. Method according to one of the claims 1 to 3, **characterized in that** it comprises a step (108) of feeding the hydrothermal carbonization unit (13) with a second digestate (44) of a second anaerobic digester (43).

5. Method according to one of the claims 1 to 4, the biodegradable liquid filtrate (21) comprising nutrients, **characterized in that** it comprises a step (109) of recovery of nutrients from the biodegradable liquid filtrate (21) upstream from the first anaerobic digester (23).

6. Method according to one of the claims 1 to 5, the digestate (24) comprising nutrients, **characterized in that** it comprises a step (109) of recovery of nutrients from the digestate or subproducts of the digestate (24) downstream from the first anaerobic digester (23).

7. Method according to one of the claims 1 to 6, the biodegradable liquid filtrate (21) comprising unwanted compounds such as refractory and/or digestion inhibitory compounds, **characterized in that** it comprises a step (111) of pre-treatment process to remove the unwanted compounds from the biodegradable liquid filtrate (21) upstream from the first anaerobic digester (23).

8. Method according to one of the claims 1 to 7, **characterized in that** it comprises a step (110) of feeding the first anaerobic digester (23) with any biomass, treated or untreated waste material (61).

9. Equipment (10, 30, 40, 50, 60) for digesting a biodegradable liquid filtrate (21), **characterized in that** it comprises:
- a hydrothermal carbonization unit (13) configured to be fed with biomass (14) and to form a product from hydrothermal carbonization;
- a dewatering unit (20) configured to dewater the product of hydrothermal carbonization into a ultra-dewatered biomass (22) and the biodegradable liquid filtrate (21);
the equipment further comprising a first anaerobic digester (23) comprising a first inlet (26) intended to be fed with at least a part of the biodegradable liquid filtrate (21) to generate biogas (12) and a digestate (24).

10. Equipment (30) according to claim 9, **characterized in that** it comprises a recirculation loop (25) between an outlet (27) of the first anaerobic digester (23) and an inlet (28) of the hydrothermal carbonization unit (13), intended to feed the hydrothermal carbonization unit (13) with at least a part of the digestate (24) of the first anaerobic digester (23).

11. Equipment (40) according to claim 9 or 10, **characterized in that** it further comprises a second anaerobic digester (43), and **in that** the second anaerobic digester (43) comprises an oulet (29) connected to an inlet (28) of the hydrothermal carbonization unit (13), so as to feed the hydrothermal carbonization unit (13) with a second digestate (44) of the second anaerobic digester (43).

12. Equipment (50) according to one of the claims 9 to 11, the biodegradable liquid filtrate (21) comprising nutrients, **characterized in that** it further comprises a device (51) located upstream from the first anaerobic digester (23), comprising extraction means to extract nutrients from the biodegradable liquid filtrate (21).

13. Equipment (50) according to one of the claims 9 to 12, the digestate (24) comprising nutrients, **characterized in that** it further comprises a device (51) located downstream from the first anaerobic digester (23), comprising extraction means to extract nutrients from the digestate (24).

14. Equipment (50) according to one of the claims 9 to 13, the biodegradable liquid filtrate (21) comprising unwanted compounds like refractory and/or digestion inhibitory compounds, **characterized in that** it further comprises a pre-treatment device (52) located upstream from the first anaerobic digester (23), comprising elimination means to remove the unwanted compounds from the biodegradable liquid filtrate (21).

15. Equipment (60) according to one of the claims 9 to 14, **characterized in that** the first anaerobic digester (23) comprises an inlet intended to be fed with any biomass, treated or untreated waste material (61).
